Europäisches Patentamt

European Patent Office

Office européen des brevets

(19)

(11) **EP 0 519 558 B1**

(12) **EUROPEAN PATENT SPECIFICATION**

(45) Date of publication and mention
of the grant of the patent:
**18.09.1996 Bulletin 1996/38**

(51) Int Cl.6: **G11B 5/31**, G11B 5/39

(21) Application number: **92201706.6**

(22) Date of filing: **11.06.1992**

(54) **Thin film read/write head without wrap-around pole effect**

Dünnfilm-Lese-/Schreibkopf ohne Pol-Umgreifeffekt

Tête de lecture/écriture à couche mince sans effet de recouvrement

(84) Designated Contracting States:
**DE FR GB IT**

(30) Priority: **18.06.1991 US 717301**

(43) Date of publication of application:
**23.12.1992 Bulletin 1992/52**

(73) Proprietor: **Philips Electronics N.V.**
**5621 BA Eindhoven (NL)**

(72) Inventors:
• **Michalek, Paul**
**NL-5656 AA Eindhoven (NL)**
• **Kirchberg, John**
**NL-5656 AA Eindhoven (NL)**
• **Rice, John**
**NL-5656 AA Eindhoven (NL)**
• **Riggles, Ray**
**NL-5656 AA Eindhoven (NL)**
• **Zieren, Victor**
**NL-5656 AA Eindhoven (NL)**

(74) Representative:
**Schrijnemaekers, Hubert Joannes Maria et al**
**INTERNATIONAAL OCTROOIBUREAU B.V.,**
**Prof. Holstlaan 6**
**5656 AA Eindhoven (NL)**

(56) References cited:
**EP-A- 0 414 976**

• **AIP CONFERENCE PROCEEDINGS,**
**MAGNETISM & MAGNETIC MATERIALS, no. 24,**
**1974, NEW YORK pages 548 - 549 C.H. BAJOREK**
**ET AL. 'An integrated magnetoresistive read,**
**inductive write high density recording head'**

**Description**

This invention relates to magnetic recording and reproducing heads, and more particularly relates to combined read/write thin film magnetic heads.

In the medium of magnetic tape, information is written onto, and read from, spaced, parallel tracks on the tapes. To increase information density, the width of the tracks, as well as the spacing between the tracks, has been steadily reduced.

To achieve magnetic heads having correspondingly small dimensions, such heads are now being manufactured using thin film processing of the type used to manufacture integrated circuits in silicon substrates. The resulting magnetic heads consist of thin layers of magnetically permeable and substantially magnetically impermeable materials.

This approach suggests the possibility of integrally combining the read and write heads into a unitary structure. Such a structure, in which a magnetorestrictive element (herein "MRE") is positioned below a gap in the lower flux guide of the read head, is described and claimed in the US-A-5.269.895 priority date 21.05.91.

In order to avoid reading of adjacent tracks due to tape alignment errors, the write head in such structures is typically wider than, for example, more than twice the width of, the read head. For example, in the recently proposed digital compact cassettes (dcc) tape format, the track width is from 185 to 195 μms, the write head width is 180 μms, and the read head width is 70 μms.

A problem associated with such a structure is a signal loss occurring during reading when the center of the read head is laterally displaced from the center of the tape track, even though the read head is still entirely within the bounds of the track.

It is an object of the invention to provide a combined read/write thin film magnetic head of the type described above, in which the signal loss occurring during reading when the read head is laterally displaced from the center of the tape track, is substantially reduced or eliminated.

In accordance with the invention, it has been discovered that this signal loss is due to the fact that the layers in the thin film structure above the relatively narrow layer or layers which define the width of the read head, e.g., the lower flux guide layers, "wrap around" these relatively narrow layers, causing a vertical offset of the outer portions of the write gap, with respect to the central portion of the write gap situated above these relatively narrow layers.

As used herein, the term "wrap around" refers to a stepped layer or structure which results when a thin film layer is formed on top of a layer which is narrower in width, or on top of another such stepped layer.

Also in accordance with the invention, this signal loss is substantially reduced or eliminated by reducing or eliminating this vertical off-set in the write gap.

Thus, a combined read/write thin film magnetic head according to one aspect of the invention comprises a plurality of thin film layers forming a read head having a read gap and a write head having a write gap, with the write head, as viewed along a normal to the tape bearing surface of the combined head, having a width greater than the width of the read head, and at least some of the thin film layers above the read head-width-defining layer having a vertical off-set of their outer portions with respect to central portions above the read head-width-defining layer, characterized in that the vertical off-set in the write gap-defining layer is smaller than the vertical off-set caused by the read head-width-defining layer.

According to a preferred embodiment of the invention, the vertical off-set in the write gap is less than 33 percent of λ where λ is the shortest wavelength or twice the bit length of the recorded information, and most preferably, there is substantially no vertical off-set caused by the read head width-defining layer, and most preferably, there is substantially no vertical off-set in the write gap.

In accordance with another embodiment of the invention, off-set reducing layers are located on the outer regions of at least one of the layers having vertical off-set.

In accordance with another embodiment of the invention, the vertical off-set in the lower surface of at least one of the layers above the read head-width-defining layer and below the write gap-defining layer is less than the vertical off-set in its upper surface, and preferably the upper surface is substantially planar.

A combined read/write thin film magnetic head according to another aspect of the invention is defined in claim 7.

In a preferred embodiment of the invention, this off-set is reduced or eliminated by reducing or eliminating the off-set in the read gap-defining insulating layer, for example, by forming a second insulating layer on this layer, preferably having about the same thickness as this layer, and then removing the portion of the second layer overlying the flux guide layers, e.g., by selective etching.

In another embodiment of the invention, the off-set is reduced or eliminated by planarizing the upper surface of the upper flux guide of the read head or the lower pole of the write head (these layers may either be separated or combined into a single, shared layer, as described in the above-referenced US-A-5.269.895, such as by chemical or plasma etching or mechanical grinding or polishing, prior to formation of the additional layers of the structure.

In accordance with yet another embodiment of the invention, the off-set is reduced or eliminated by burying the lower flux guide layers in the underlying layer which insulates these flux guide layers from the MRE.

The invention will now be described, by way of example, in greater detail in conjunction with the attached Drawing in which:

Fig. 1 is a cross-section of a combined read/write thin film magnetic head of the prior art, viewed along a normal to the tape-bearing surface;

Fig. 2 is a cross-section similar to that of Fig. 1 for an embodiment of the head of the invention;

Fig. 3 and 4 are cross-sections similar to that of Fig. 2 for two additional embodiments of the invention;

Fig. 5 is a diagrammatic illustration of the lateral off-set which can occur between the center of the write-defined track and the reader;

Fig. 6 is a graphic illustration of the calculated relationship between normalized signal strength Urms/Urms, max and reader track off-set, $\Delta$;

Fig. 7 is a graphic illustration similar to that of Fig. 6 for both normalized signal strength and signal loss versus the step in the trailing edge of the write gap $\delta$ divided by the bit length $\lambda$ of the recorded information, from 0 to 1; and

Fig. 8 is a graphic illustration of measured signal strength versus reader track off-set for a combined read/write thin film magnetic head of the prior art.

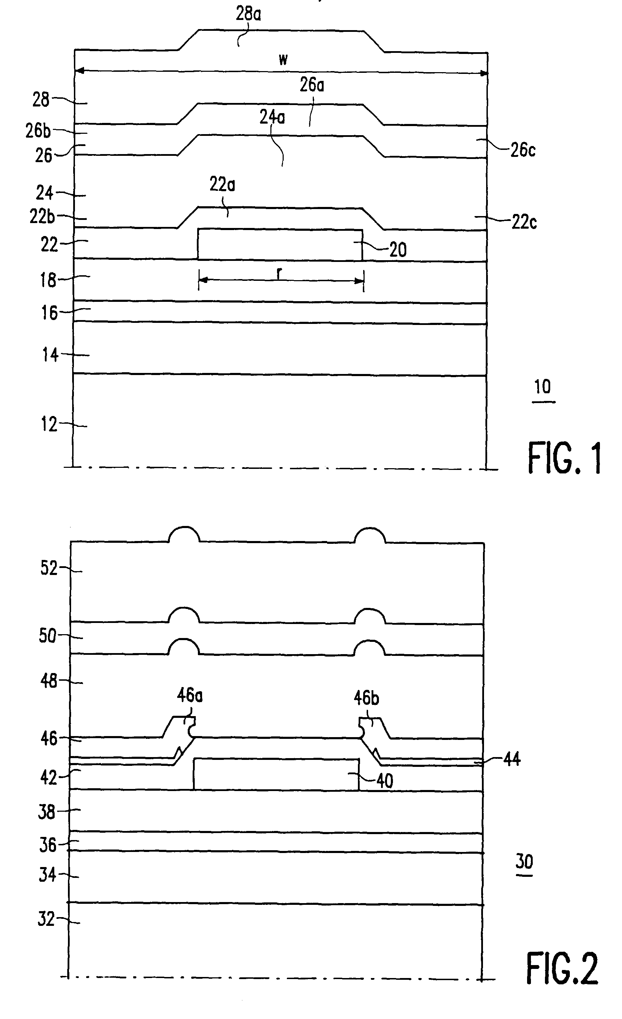

Referring now to Fig. 1, there is shown in cross section, as viewed along a normal to the tape-bearing surface, a combined read/write thin film magnetic head of the type having an MRE situated below a gap between two lower flux guide sections, as described in the above-mentioned US-A-5.269.895. (The cross-section of Fig. 1 is taken between the tape-bearing surface and the MRE, and consequently does not include the MRE).

A substrate 12 of substantially magnetically impermeable material such as $Al_2O_3/TiO_2$ supports the head structure. In order to provide a substantially planar surface on which to deposit the MRE, and to provide electrical insulation between the MRE and the substrate, a relatively thick layer 14 of electrical insulating and substantially magnetically impermeable material, such as $Al_2O_3$, is deposited onto the substrate and polished. In order to cover sharp cornered scratches left by conventional polishing techniques, a relatively thin overlayer 16 of an electrically insulating and substantially magnetically impermeable material, such as $Al_2O_3$, is deposited on layer 14.

After formation of the MRE, (not shown in this cross-section), electrical insulation from the overlying flux guide sections is provided by layer 18 of an electrically insulating material, such as $Al_2O_3$, and the lower flux guide sections, the forward one 20 of which is shown in the Figure, formed of a magnetically permeable material such as permalloy, are deposited on insulating layer 18. These flux guide sections are formed, for example, by initially depositing a continuous layer and then etching away the unwanted material, or by selective deposition techniques.

The read gap of the read head is defined by layer 22 of magnetically impermeable material, such as $Al_2O_3$, deposited over the lower flux guide sections. Over this layer is then deposited layer 24 of magnetically permeable material such as permalloy, which serves not only as the upper flux guide of the read head, but also the lower pole of the write head. This "shared" flux guide may be conveniently deposited by conventional techniques, such as plating.

An overlying layer 26 of substantially magnetically impermeable material, such as $Al_2O_3$, defines the write gap, and magnetically permeable layer 28 forms the top pole of the write head, completing the combined read/write head thin film structure.

The width "r" of the lower flux guide sections define the width of the read head portion of the combined read/write head, which, as can be seen from the Figure, is substantially narrower than the width "w" of the overlying write head.

Because of this relatively narrow width of flux guide sections, the overlying layers each have central portions 22a through 28a above flux guide section 20, and outer portions, 22b through 28b and 22c through 28c, vertically off-set from the central portion. Thus, the write gap defining oxide layer 26 has such a vertical offset.

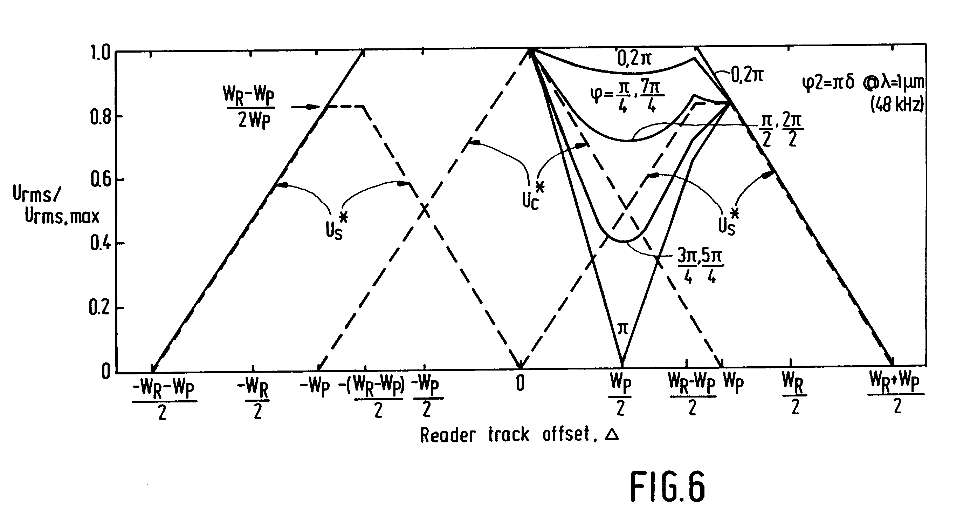

According to the invention, it has been discovered that the vertical off-set of the write gap, herein termed "wrap-around", can lead to signal loss during reading when the read head is laterally off-set from the center of the tape track. Fig. 5 shows such a write gap 500, in which the outer or side regions 500b and 550c are vertically off-set from the central region 500a. The width of the write gap also defines the width Wr of the track. Due to wrap-around, the width of the central region 500a of the write gap is the same as the width Wp of the lower flux guide 510. The center of lower flux guide 510 is laterally off-set from the center line of the track by an amount $\Delta$. The step in the write gap is defined by $\delta$.

The effect of the wrap-around can be calculated using the following symbols, assumptions and theory:

<u>List of symbols</u>

$\lambda =$      wavelength or bit length of recorded information

$\Delta =$      reader-track offset,

$\delta =$      step in trailing edge of write gap

$\phi =$      phase shift of side regions of writer

$U_c =$      amplitude of central region of writer

$U_s =$ amplitude of side region of writer
$W_R =$ writer track width
$W_P =$ reader track width

Assumptions:

a) central writer region has a width $W_P$.
b) writer is positioned symmetrically on top of reader.
c) no side-write effects.

Theory

The central writer has a phase zero. The signal read from the part of the tape written by this central writer is:

$$U_c(t) = U_c(\Delta) \sin \omega\tau \tag{1}$$

and

$$U_c(\Delta) = U_c(0) \left(\frac{W_P - |\Delta|}{W_P}\right) \ if \ |\Delta| \leq W_P \tag{2}$$

The side writer regions have a phase $\phi$, due to the shift of the trailing gap edge $\delta$:

$$\phi = \left(\frac{2\pi}{\lambda}\right) \delta \tag{3}$$

The read signal read from these regions is (for $2W_P < W_R < 3W_P$):

$$U_s(\tau) = U_s(\Delta) \sin (\omega\tau + \phi) \tag{4}$$

and

$$U_s(\Delta) = U_c(0) \left(\frac{|\Delta|}{W_P}\right) \ if \ |\Delta| \leq W_R - W_P \tag{5}$$

$$U_s(\Delta) = U_c(0) \left(\frac{W_R - W_P}{2W_P}\right) \ if \ \frac{W_R - W_P}{2} \leq |\Delta| \leq W_P \tag{6}$$

$$U_s(\Delta) = U_c(0) \left(\frac{W_R + W_R - 2|\Delta|}{2W_P}\right) \ if \ W_P \leq |\Delta| \leq \frac{W_R + W_P}{2} \tag{7}$$

The functions $U_s(\Delta)^* = U_s(\Delta)/U_c(0)$ and $U_c(\Delta)^* = U_c(\Delta)/U_c(0)$ are plotted in Fig. 6 as dashed lines. In this figure, the total rms-voltage, normalized to its maximum (for $\Delta = 0$) is also plotted in solid lines. This output is calculated as follows. The total playback signal is:

$$U_t(\tau) = U_c(\tau) + U_s(\tau) \tag{8}$$

Using Eqs. (1) and (4), yields:

$$U_t(\tau) = U_c(\Delta) \sin \omega\tau + U_s(\Delta) \sin (\omega\tau + \phi) \tag{9}$$

The rms-value is:

$$U_{rms} = \sqrt{\frac{U_c^2(\Delta) + U_s^2(\Delta) + 2U_c(\Delta) \ U_S(\Delta)\cos\phi}{2}} \tag{10}$$

For $\Delta = 0$, $U_s(\Delta) = 0$, (Eqn. (5)), thus:

$$U_{rms,max} = \frac{U_C(0)}{\sqrt{2}} \tag{11}$$

Consequently, the normalized rms-voltage is:

$$\frac{U_{rms}(\Delta)}{U_{rms,max}} = \frac{1}{U_c(0)}\sqrt{U_c^2(\Delta) + U_s^2(\Delta) + 2U_c(\Delta) \ U_s(\Delta)\cos\phi} \tag{12}$$

For distinctive regions of $\Delta$, Eq. (12) has been evaluated with Eqns. (2), (5)-(7) in Fig. A. It is a symmetrical (even) function of $\Delta$, so only the curves for positive $\Delta$ are shown, with $\phi$ as a parameter. A local minimum occurs for $|\Delta| = W_P/$

2, using Eqns. (2) and (5):

$$\frac{U_{rms}(|\Delta| = W_P/2)}{U_{rms,max}} = \sqrt{\frac{1+\cos\phi}{2}} \qquad (13)$$

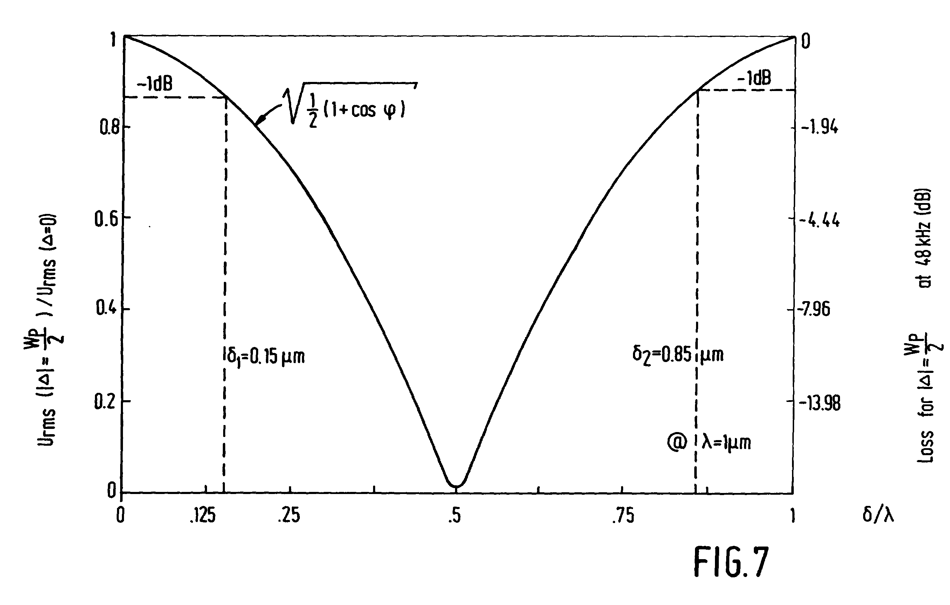

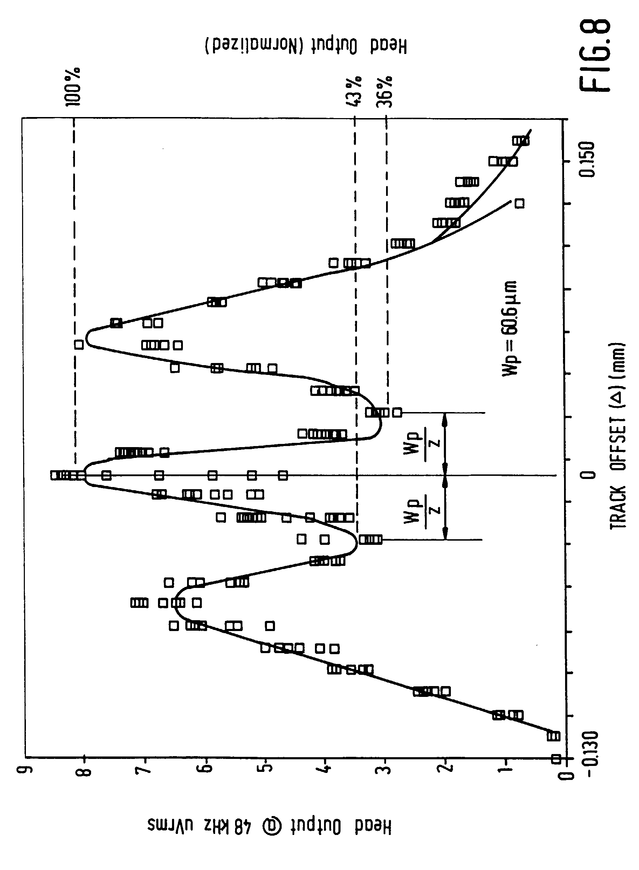

This loss function is shown in Fig. 7. The horizontal axis gives the values of $\delta/\lambda$ (for $\lambda = 1$ μm). The loss is also expressed in dB (righthand ordinate). It appears that a loss of 1 dB already occurs if $\delta_1 = 0.15$ μm (or $\delta_s = 0.85$ μm). An experimental track-scan measurement, on a head of the type shown in Fig. 1, is shown in Fig. 8, and shows much resemblance with Fig. 6. The relative values of the local minima are not symmetrical for $\Delta$. For negative $\Delta$ we find:
$U_{rms}/U_{rms,max} = 0.43$, thus $\delta- = 0.358$ μm.

For positive $\Delta$, we find:
$U_{rms}/U_{rms,max} = 0.36$, thus $\delta+ = 0.383$ μm.

The reason for this asymmetry is experimental error. The distance of the absolute minima is 250 μm (extrapolated). This is in agreement with the design values $W_R = 185$ μm and $W_P = 65$ μm. The position of the local minima leads to a $W_P$ value of 61 μm.

From the above, it can be concluded that, depending on the system requirement on the tolerable 48 kHz-signal loss due to track misalignment, $\Delta$, only very small values of the trailing edge shift, $\delta$, can be tolerated: 0.15 μm for 1 dB loss.

According to the invention, this wrap around pole effect can be reduced or eliminated by reducing or eliminating the vertical off-set or step $\delta$ in the write gap.

Fig. 2 shows a cross-section similar to that of Fig. 1 in which the step $\delta$ has been eliminated. Substrate 32 supports $Al_2O_3$ layers 34 through 38, lower flux guide section 40 and read gap layer 42, which wraps around flux guide section 40. On layer 42 is deposited a thin "etch stop" layer 44 of a material such as molybdenum, which is capable of protecting underlying layer 42 from being etched. On layer 44 is formed an extra oxide layer 46, preferably having thickness equal to the step in the read gap layer 42, reduced by the thickness of the etch stop layer. Following this, the central portion of layer 46 overlying flux guide section 40 is removed, such as by etching through a photo-mask, after which the exposed etch stop layer is removed by etching which is selective for that layer. Projections 46a and 46b, artifacts of the etching process, do not significantly affect operating characteristics of the head.

By way of example, for a flux guide section 40 having a thickness of 0.5 μms and a read gap 42 of 0.4 μms, an 0.1 μm thick etch stop layer 44 is formed over the layer 42, after which a 0.4 μm thick oxide layer 46 is formed on layer 44. After these layers are formed, the central portion of layer 46 is removed by etching through a photomask, followed by removing the exposed portion of layer 44 using an etchant selective for it. Then the photomask is removed. The layers 48, 50, 52 correspond to the layers 24, 26, 28, respectively, of the device of Fig. 1.

For conventional processing techniques having the ability to produce desired thicknesses to an accuracy of plus or minus 5 percent, the write gap off-set in the above example is reduced from 0.5 μms to zero plus or minus 0.14 μms.

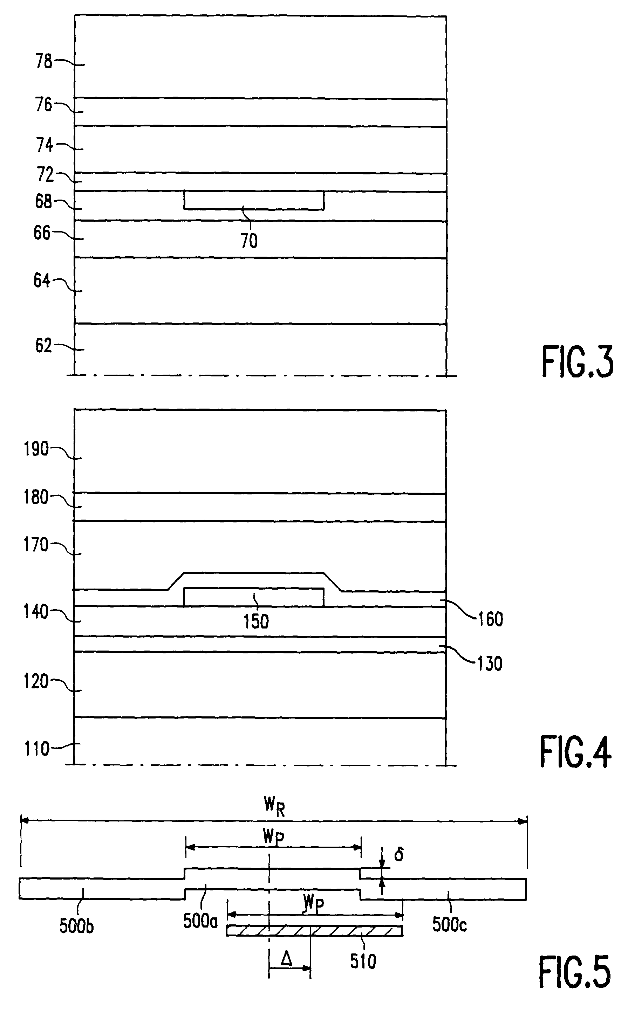

Another embodiment of the invention is shown in Fig. 3, in which the layers 62 through 66 and 72 through 78, correspond to layers 12 through 16 and 22 through 28, respectively, of Fig. 1. In this embodiment, the off-set is reduced or eliminated by burying the lower flux guide layers (one of which, 70, is shown) in the underlying layer 68 which insulates these flux guide layers from the MRE, for example, by forming a trench in the insulating layer 68, then filling the trench with flux guide material, either by selective deposition, or by forming a layer of flux guide material over the entire surface, and then removing the portions of the layer of flux guide material above the trench by, for example, etching through a photomask. In such instance, it may be necessary to provide an insulating layer of increased thickness in order to maintain adequate separation of the buried flux guide layers from the underlying MRE.

Another embodiment of the invention is shown in Fig. 4, in which layers 110 through 190 correspond to layers 12 through 28 of Fig. 1. In this embodiment, the step in the write gap is prevented by planarization of lower pole 170 prior to formation of the write gap layer 180. This can be accomplished, for example, by plasma etching, grinding or polishing layer 170.

The invention has been described in terms of a limited number of embodiments. Other embodiments as well as variations and modifications of the described embodiments will become apparent to those skilled in the art, without departing from the scope of the invention as set forth in the claims.

## Claims

1. A combined read/write thin film magnetic head comprising a plurality of thin film layers forming a read head having a read gap and a write head having a write gap, the write head, as viewed along a normal to the tape bearing surface of the combined head, having a width (w) greater than the width (r) of the read head, and at least some of the thin film layers above the read head-width-defining layer (40;150) having a vertical off-set ($\delta$) of their outer portions with respect to central portions above the read head-width-defining layer, characterized in that the vertical off-set in the write gap-defining layer (50;180) is smaller than the vertical off-set caused by the read head-width-defining layer.

2. The combined head of claim 1, characterized in that the vertical off-set in the write gap is less than 33 percent of the shortest wavelength being twice the bit length of recorded information.

3. The combined head of claim 1, characterized in that there is substantially no vertical off-set in the write gap.

4. The combined head of claim 1, characterized in that off-set reducing layers (44,46) are located on the outer regions of at least one (42) of the layers having vertical off-set.

5. The combined head of claim 1, characterized in that the vertical off-set in the upper surface of at least one (170) of the layers above the read head-width-defining layer and below the write gap-defining layer is less than the vertical off-set in its lower surface.

6. The combined head of claim 5, characterized in that the upper surface is substantially planar.

7. A combined read/write thin film magnetic head comprising a plurality of thin film layers forming a read head having a read gap and a write head having a write gap, the write head, as viewed along a normal to the tape bearing surface of the combined head, having a width (w) greater than the width (r) of the read head, characterized in that the read head-width-defining layer (70) is buried in the layer (68) below the read head-width defining layer, so that the upper surfaces of these two layers are substantially coplanar.

**Patentansprüche**

1. Kombinierter Dünnfilm-Lese-/Schreib-Magnetkopf mit einer Anzahl Dünnfilmschichten, die einen Lesekopf mit einem Lesespalt und einen Schreibkopf mit einem Schreibspalt bilden, Wobei der Schreibkopf gesehen in Richtung einer Normalen auf der Bandtragefläche des kombinierten Kopfes eine Breite (W) aufweist, die größer ist als die Breite (R) des Lesekopfes, und wobei wenigstens einige der Dünnfilmschichten über der lesekopfbreitenbestimmenden Schicht (40; 150) einen vertikalen Offset (δ) der Außenteile gegenüber den Mittenteilen über der lesekopfbreitenbestimmenden Schicht haben, <u>dadurch gekennzeichnet</u>, daß der vertikale Offset in der schreibspaltbestimmenden Schicht (50; 180) kleiner ist als der durch die lesekopfbreitenbestimmende Schicht verursachte vertikale Offset.

2. Kombinierter Kopf nach Anspruch 1, <u>dadurch gekennzeichnet</u>, daß der vertikale Offset in dem Schreibspalt weniger als 33% der kürzesten Wellenlänge bzw. die doppelte Bitlänge der aufgezeichneten Information ist.

3. Kombinierter Kopf nach Anspruch 1, <u>dadurch gekennzeichnet</u>, daß es nahezu keinen vertikalen Offset in dem Schreibspalt gibt.

4. Kombinierter Kopf nach Anspruch 1, <u>dadurch gekennzeichnet</u>, daß auf den Außengebieten wenigstens einer (42) der Schichten mit einem vertikalen Offset Offsetverringerungsschichten (44, 46) vorgesehen sind.

5. Kombinierter Kopf nach Anspruch 1, <u>dadurch gekennzeichnet</u>, daß der vertikale Offset in der oberen Fläche wenigstens einer (170) der Schichten über der lesekopfbreitenbestimmenden Schicht und unter der schreibspaltbestimmenden Schicht geringer ist als der vertikale Offset in der unteren Oberfläche.

6. Kombinierter Kopf nach Anspruch 5, <u>dadurch gekennzeichnet</u>, daß die obere Fläche nahezu flach ist.

7. Kombinierter Dünnfilm-Lese-/Schreib-Magnetkopf mit einer Anzahl Dünnfilmschichten, die einen Lesekopf mit einem Lesespalt und einen Schreibkopf mit einem Schreibspalt bilden, Wobei der Schreibkopf gesehen in Richtung einer Normalen auf der Bandtragefläche des kombinierten Kopfes eine Breite (W) aufweist, die größer ist als die Breite (R) des Lesekopfes, <u>dadurch gekennzeichnet</u>, daß die lesekopfbreitenbestimmende Schicht (170) in der Schicht (68) unterhalb der lesekopfbreitenbestimmenden Schicht vergraben ist, so daß die oberen Flächen dieser beiden Schichten nahezu planparallel sind

**Revendications**

1.  Tête magnétique combinée de lecture/écriture à film mince comprenant une pluralité de couches en film mince formant une tête de lecture comportant un entrefer de lecture et une tête d'écriture comportant un entrefer d'écriture, la tête d'écriture, vue suivant une normale à la surface d'appui de la bande, ayant une largeur (w) supérieure à la largeur (r) de la tête de lecture, et au moins certaines des couches en film mince placées au-dessus de la couche (40; 150) définissant la largeur de la tête de lecture présentant un décalage (δ) de leurs parties extérieures par rapport aux parties centrales placées au-dessus de la couche définissant la largeur de la tête de lecture, caractérisée en ce que le décalage vertical dans la couche (50; 180) définissant l'entrefer d'écriture est inférieur au décalage vertical engendré par la couche définissant la largeur de la tête de lecture.

2.  Tête combinée suivant la revendication 1, caractérisée en ce que le décalage vertical dans l'entrefer d'écriture est inférieur à 33% de la plus courte longueur d'onde qui vaut le double de la longueur binaire de l'information enregistrée.

3.  Tête combinée suivant la revendication 1, caractérisée en ce qu'il n'y a pratiquement pas de décalage vertical dans l'entrefer d'écriture.

4.  Tête combinée suivant la revendication 1, caractérisée en ce que des couches (44, 46) réductrices de décalage sont placées sur les régions extérieures d'au moins une (42) des couches ayant un décalage vertical.

5.  Tête combinée suivant la revendication 1, caractérisée en ce que le décalage vertical dans la surface supérieure d'au moins une (170) des couches placées au-dessus de la couche définissant la largeur de la tête de lecture et en dessous de la couche définissant l'entrefer d'écriture est inférieur au décalage vertical dans sa surface inférieure.

6.  Tête combinée suivant la revendication 5, caractérisée en ce que la surface supérieure est sensiblement plane.

7.  Tête magnétique combinée de lecture/écriture à film mince comprenant une pluralité de couches en film mince constituant une tête de lecture ayant un entrefer de lecture et une tête d'écriture ayant un entrefer d'écriture, que la tête d'écriture, vue suivant une normale à la surface d'appui de bande de la tête combinée, ayant une largeur (w) supérieure à la largeur (r) de la tête de lecture, caractérisée en ce que la couche (70) définissant la largeur de la tête de lecture est noyée dans la couche (68) placée en dessous de la couche définissant la largeur de la tête de lecture, de sorte que les surfaces supérieures de ces deux couches sont sensiblement coplanaires.

FIG. 1

FIG.2

FIG.3

FIG.4

FIG.5

FIG.6

FIG.7

EP 0 519 558 B1

FIG.8